# FASCICULE DE BREVET EUROPEEN

(11) **EP 0 255 741 B1**
(45) Date de publication et mention de la délivrance du brevet: **01.12.1993**
(21) Numéro de dépôt: 87201386.7
(22) Date de dépôt: 21.07.1987
(51) Int. Cl.: F16D 55/224

(54) **Pince pour frein à disque, pour véhicules**
Scheibenbremszange für Fahrzeuge
Disk brake caliper for vehicles

(30) Priorité: 01.08.1986 IT 6761986
(43) Date de publication de la demande: 10.02.1988
(73) Titulaire: AlliedSignal Freni S.p.A., 70026 Modugno (IT)
(72) Inventeur: Zucca Pol, Bruno, I-10081 Castellamonte (Torino) (IT); Tribuzio, Pasquale, Ing., I-70032 Bitonto (Bari) (IT)
(74) Mandataire: Bentz, Jean-Paul

(56) Documents cités:
- BE-A- 565 708
- DE-A- 2 742 319
- DE-B- 1 146 712
- FR-A- 1 089 929
- FR-A- 1 390 467
- FR-A- 1 552 836
- FR-A- 2 108 623
- FR-A- 2 331 715
- FR-A- 2 441 766
- FR-A- 2 444 848
- FR-A- 2 470 292
- US-A- 3 384 203

## Description

La présente invention concerne une pince pour frein à disque, du type comprenant un étrier destiné à être monté en position fixe à proximité d'un disque tournant de frein associé, un corps flottant supporté par ledit étrier de manière à pouvoir se déplacer perpendiculairement au plan dudit disque de frein, une partie dudit corps flottant constituant un cylindre hydraulique avec axe parallèle à la direction de mouvement du corps, un piston installé dans ledit cylindre, et deux patins de freinage disposés de manière à agir sur les deux faces dudit disque de frein et opérativement reliés, respectivement, audit piston et à la partie du corps opposée audit cylindre.

Plus précisément, la présente invention concerne une pince de frein du type défini dans le préambule de la revendication 1 et dont les brevets FR 1 552 836 et GB 1 541 021 donnent des exemples.

Un problème qui se pose de façon générale dans la réalisation de pinces de freins, lesquelles sont produites en grande série, est celui qui consiste, entre autres, à maîtriser les tolérances de fabrication ou tout au moins les effets négatifs des dispersions de cotes résultant de ces tolérances, cette maîtrise devant notamment permettre le montage rapide des pièces fabriquées et une réduction optimale des jeux, de manière a éviter les bruits en fonctionnement et les chocs générateurs d'usure.

Le but de l'invention est précisément de perfectionner les pinces de frein du type précédemment mentionné en rendant leur fabrication plus aisée et moins coûteuse.

Ce but est atteint, selon l 'invention, par le fait que l'étrier forme deux épaulements portant les faces de support et de guidage pour les patins de freinage et que les goupilles destinées à maintenir les patins en position sont insérées dans des sièges prévus à cet effet dans les épaulements de l'étrier et des patins.

Ainsi, au lieu d'être portées par les deux parties du corps flottant comme c'est le cas dans l'art antérieur précédemment identifié, c'est-à-dire entre des pièces constructivement séparées et relativement éloignées l'une de l'autre, donc avec des difficultés d'ajustage et une portée relativement importantes, les goupilles sont, conformément à la présente invention, portées par une seule et même pièce de moindre largeur, ce qui permet à la fois l 'utilisation de goupilles plus petites, un montage plus aisé, un meilleur ajustage, et la réduction des bruits de fonctionnement.

Ces caractéristiques et d'autres, et les avantages de l'objet de l'invention, ressortiront plus clairement de la suivante description de quelques formes de réalisation, données à titre d'exemples non limitatifs et représentées schématiquement dans les dessins annexés, dans lesquels:
Fig. 1 montre une pince selon l'invention, vue suivant une direction parallèle du plan du disque de frein associé, de l'extérieur de celui-ci, et sectionnée dans sa moitié de droite suivant un plan qui passe par le cylindre hydraulique (ligne I-I de la figure 2);
Fig. 2 montre la pince de la figure 1, vue suivant l'axe du cylindre hydraulique du côté opposé à ce dernier, et sectionnée, dans la moitié de droite, suivant la ligne II-II de la figure 1;
Fig. 3 montre la pince de la figure 1, vue suivant la flèche III de la figure 1 même;
Fig. 4 montre en section un détail du guidage d'une entretoise par l'étrier, modifié par rapport à la figure 1;
Fig. 5 montre, d'une façon similaire de celle de la figure 1, une partie du corps de la pince, destinée à être montée en remplacement de la partie correspondante de la figure 1 lors que la pince doit être pourvue aussi d'une commande mécanique du freinage;
Fig. 6 montre la partie de corps de la figure 5, vue suivant la flèche VI de la figure 5 même;
Figs. 7 et 8 montrent, d'une façon similaire de celle des figures 1 et 2, une autre forme de réalisation de la pince selon l'invention; et
Fig. 9 montre un détail d'une forme modifiée.

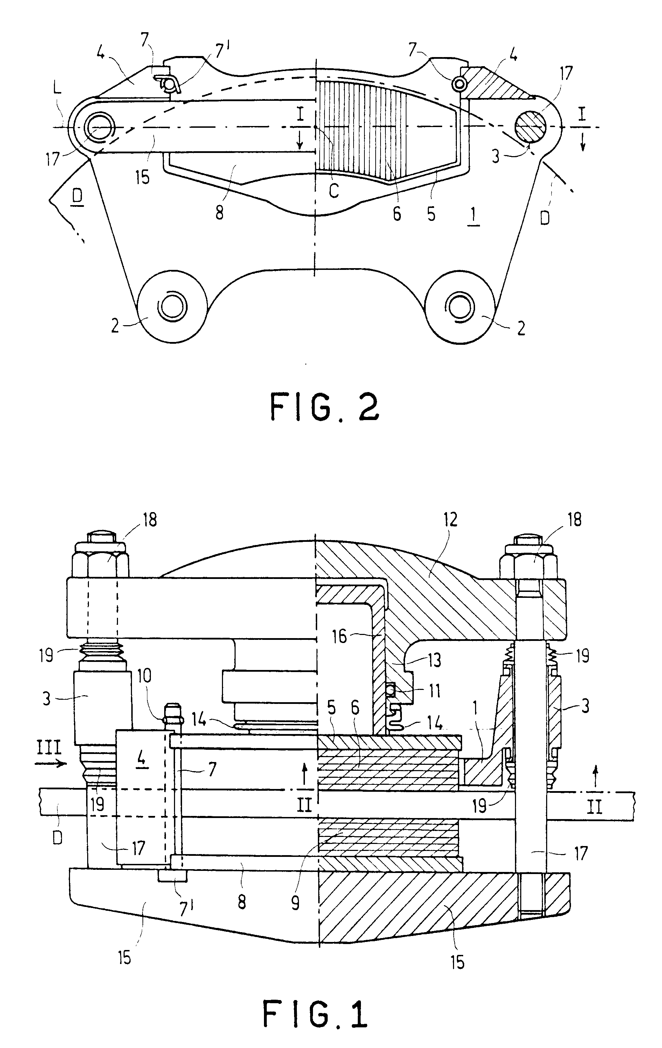

Faisant référence à la forme de réalisation suivant les figures 1 et 2, la pince comprend un étrier pourvu d'oreilles 2 afin de pouvoir être fixé à une partie structurelle fixe (telle qu'un montant d'une suspension d'un véhicule) à proximité d'un disque de freinage D. L'étrier 1 est pourvu de sièges 3 pour soutenir et guider le corps de la pince, et de plus il forme deux épaulements 4 pour guider et appuyer les patins de freinage. Les patins de freinage 5 et 8, pourvus de garnitures de frottement 6 et 9, sont logés entre les épaulements 4 de l'étrier 1, des deux côtés du disque de freinage D, et ils sont guidés et soutenus par des goupilles élastiques 7 insérées en des sièges formés en partie dans les patins 5, 8 et en partie dans les épaulements 4. Les goupilles élastiques 7 sont pourvues d'un côté d'une tête 7' et d'autre côté d'un anneau élastique de retenue 10, de sorte qu'elles sont normalement maintenues dans leurs sièges, et elles tiennent en position les patins de freinage. Les goupilles 7 peuvent, cependant, être désenfilées avec facilité en les libérant des anneaux élastiques 10, après quoi, à leur tour, les patins de freinage 5 et 8 peuvent facilement être déboîtés pour des opérations de contrôle ou de remplacement. De plus, le caractère élastique des goupilles 7 pourvoit à la reprise des jeux de montage des patins de freinage par rapport à l'étrier, en évitant tout bruit pendant la marche.

Le corps 12 de la pince s'étend, comme d'habitude, en formant un cylindre 13, qui peut être alimenté par de l'huile sous pression à travers un raccord non représenté, et dans lequel est logé un piston 16 disposé pour agir sur le premier patin de freinage 5. L'étanchéité entre le cylindre 13 et le piston 16 est établie par une garniture 11, et une garniture à soufflet 14 protège contre le souillement la partie du piston 16 qui fait saillie en dehors du cylindre 13. Contrairement aux formes de réalisation connues, le corps 12 ne forme pas un pont disposé à cheval du disque de frein D et ayant des becs disposés pour agir sur le deuxième patin de freinage 8; au contraire, le corps comprend une deuxième partie 15, constructivement séparée de la partie 12 et disposée du côté du disque de frein D opposé au côté où se trouve le cylindre 13. Cette deuxième partie 15 du corps a la forme d'une simple traverse à poutre (figures 1 et 2), et elle agit sur le deuxième patin de freinage 8. Soit le corps 12 que la traverse 15 s'étendent lelong d'une ligne L (figure 2) qui passe substantiellement par le centre de pression C des patins de freinage 5 et 8 (auquel, de préférence, correspond aussi l'axe du cylindre 13), et ils s'étendent lelong de ladite ligne jusqu'à un point au delà de la périphérie du disque de frein D. Près de leurs extrémités situées sur la ligne L, les deux parties 12 et 15 du corps sont reliées entr'elles par deux entretoises 17 lesquelles, dans cet exemple de réalisation, sont vissées dans la traverse 15 et sont fixées par des écrous 18 au corps 12. Les entretoises 17 passent avec un accouplement glissant à travers les sièges 3 de l'étrier 1, et donc elles soutiennent dans leur position opértive correcte le corps 12 et la traverse 15, tout en autorisant leur déplacement en une direction perpendiculaire au disque de freinage D, afin d'assurer au corps son caractère flottant. Les accouplements entre les entretoises 17 et les sièges 3 de l'étrier 1 sont protégés par des garnitures à soufflet 19.

Les entretoises 17 ont donc la fonction en soi connue - normalement exploitée par des petites colonnes de guidage - de soutenir le corps d'une façon flottante par rapport à l'étrier, mais en même temps elles ont aussi le but de transmettre la force nécessaire pour appliquer le deuxième patin de freinage 8 contre le disque de frein D, cette tâche étant impartie, d'habitude, au corps en pont. Cependant, du fait que les entretoises 17 sont substantiellement alignées (lelong de la ligne L) avec les centres de pression C des patins, la force transmise ne les sollicite pas à la flexion mais seulement à la traction, et c'est pour cette raison que des minces entretoises 17 sont capables de remplacer dans sa fonction un lourd pont. De leur côté, les parties 12 et 15 du corps, qui sont sollicitées centralement par les forces d'application des patins de freinage et près de leurs extrémités par les forces transmises par les entretoises 17, se comportent comme des poutres sollicitées à la flexion, et leur rigidité suffisante peut être obtenue sans qu'elles doivent être excessivement massives. Somme toute, il s'ensuit une forte réduction du poids du corps et donc de toute la pince du frein.

De plus, les conditions favorables de sollicitation autorisent, si on le croit à propos, l'adoption de matériaux légers, comme les alliages d'aluminium, pour la construction du corps, qui d'habitude est en fonte.

Du fait que les entretoises traversent l'étrier et elles ne sont pas montées en porte-à-faux sur lui, comme les petites colonnes de guidage connues, par la construction selon l'invention on obtient aussi l'avantage que, pendant le déplacement du corps par rapport à l'étrier, le guidage de support ne se modifie pas, en assurant des conditions de travail uniformes à l'appareil, quelle que soit sa condition, à savoir avec les garnitures soit neuves, soit consommées. Cela élimine l'inconvénient présenté par les systèmes connus, qui réalisent des conditions de guidage qui deviennent moins favorables au fur et à mesure de l'accroissement de la consommation des garnitures.

Enfin, les deux pièces 12 et 15 séparées ont, chacune, une forme assez simple et des encombrements réduits en comparaison de la pièce unique formant le corps en pont dans les constructions connues, de sorte que l'usinage de ces pièces est bien moins difficile et coûteuse. Cela se rapporte en particulier aux opérations d'alésage du cylindre 13, qui sont de la plus grande facilité pour la pièce 12 du corps selon l'invention, tandis qu'elles sont gravement entrâvées par la conformation en pont e par la présence des becs, dans les corps des pinces connues.

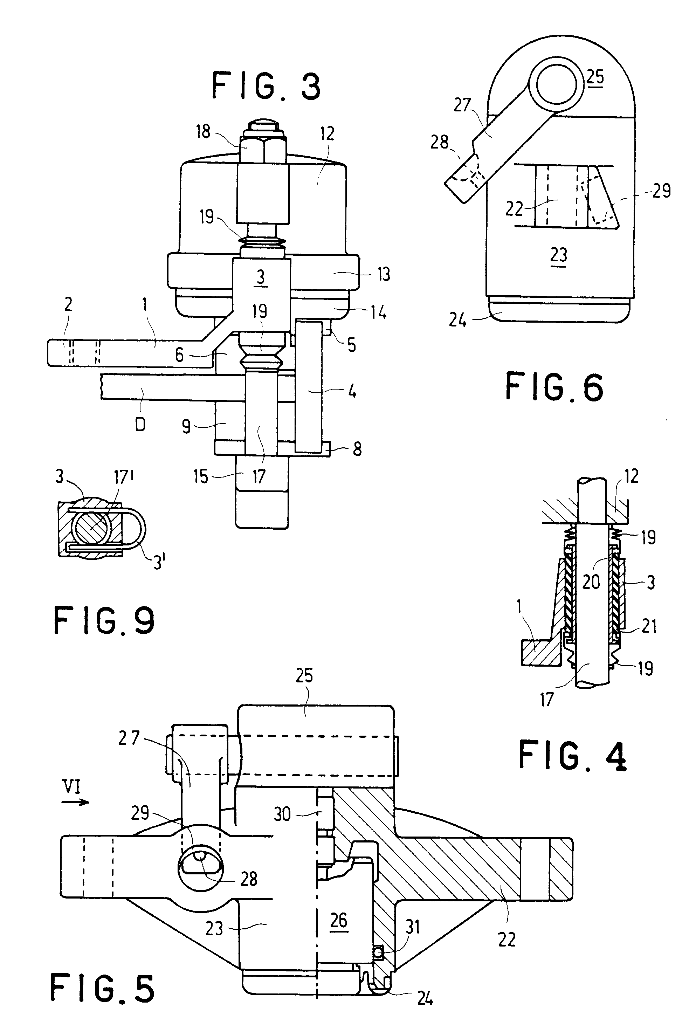

L'usinage des sièges 3 de l'étrier 1 a les mêmes exigences des parties qui, dans les étriers connus, doivent guider les petites colonnes de support du corps. Mais les exigences d'usinage de ces sièges 3 peuvent être aussi simplifiées en confiant à l'un seulement d'entr'eux la tâche de réaliser un accouplement précis avec l'entretoise 17 correspondante, et en donnant à l'autre siège 3 une forme en boutonnière, de sorte à ne pas demander la réalisation d'une distance précise entre les deux sièges. Ou bien, pour l'une ou l'autre des deux sièges l'on peut adopter la construction indiquée dans la figure 4. Dans ce cas, le siège 3 contient un fourreau 20, dans lequel est couplée à glissement l'entretoise 17. Une douille 21 en matière élastomérique est insérée, éventuellement comprimée, entre le siège 3 et le fourreau 20. Cette construction autorise la compensation de tolérances même considérables dans la détermination de la distance effective entre les sièges 3, ainsi facilitant leur usinage.

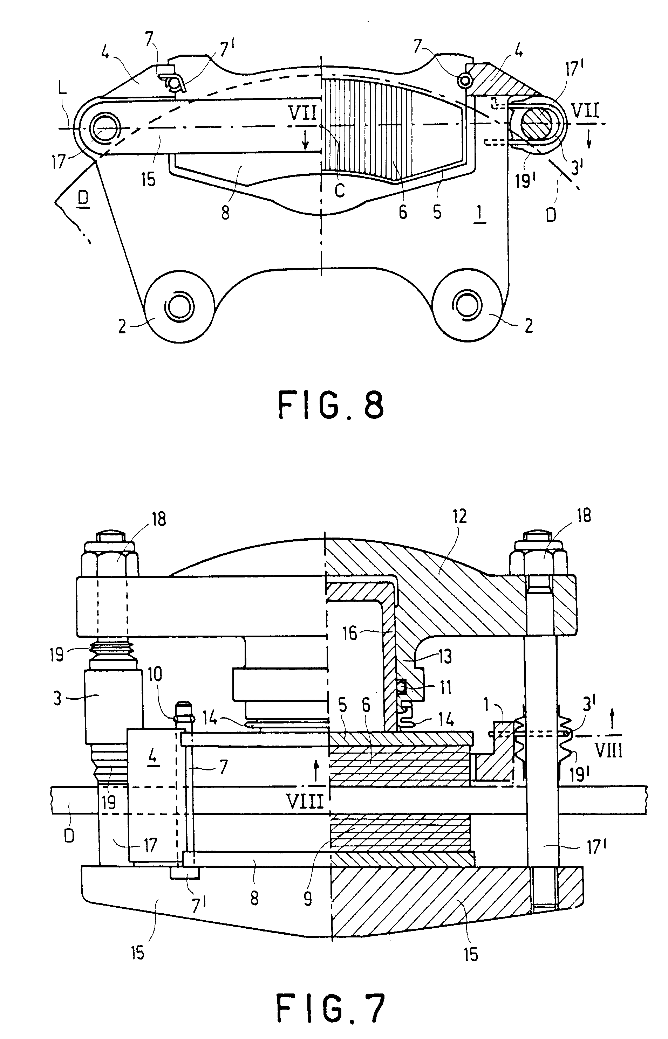

Du fait que les entretoises 17 sont alignées avec les centres de pression des patins de freinage 5 et 8, dans le fonctionnement aucune force opérative considérable ne cherche a fair tourner les patins de freinage autour de leur centre de pression. Pour cette raison il est suffisant que l'une seulement des entretoises 17 traverse l'étrier 1 et en soit guidé positivement, tandis que l'autre entretoise peut être tenue en position par des moyens plus simples. Cette possibilité est représentée, par exemple, par la forme de réalisation montrée dans les figures 7 et 8. Dans ces figures, les parties qui correspondent à celles de la forme de réalisation suivant les figures 1 et 2 sont désignées par les mêmes références et elles ne sont pas décrites ultérieurement. Comme on le remarque, la première entretoise 17, qui est à gauche, traverse toujours l'étrier 1 dans un siège 3, avec un accouplement de guidage opportunément protégé par les soufflets 19. De son côté, la deuxième entretoise 17ʹ, qui est à droite, n'est pas couplée à glissement dans un siège comme 3, mais elle est simplement tenue en position par une broche 3ʹ accrochée à l'étrier 1, lequel est dépourvu du siège 3 de droite. Le cas échéant on peut prévoir un petit soufflet 19ʹ ayant des ouvertures latérales pour être traversé par les branches de la broche 3ʹ, mais dans la plupart des cas l'on peut simplement omettre tout soufflet dans cet accouplement à broche. Par cette construction on allège ultérieurement l'étrier et on évite l'usinage d'un siège 3 ainsi que, le cas échéant, l'emploi d'un second soufflet 19, ainsi réduisant encore le poids et le prix de revient de l'ensemble.

Comme le montre la figure 9, qui représente une section correspondante à une partie de la figure 8 dans une forme de réalisation modifiée, il est aussi possible d'employer une broche 3ʹ pour centrer la deuxième entretoise 17ʹ dans un siège 3, similaire de ceux suivant les figures 1 et 2, mais pourvu d'un jeu considérable. La broche 3ʹ est enfoncée dans la partie 3 de l'étrier par l'une de ses branches, tandis que l'autre branche est couplée avec un jeu, de sorte que la broche puisse expliquer son elasticité. L'on peut prévoir un revêtement de la broche 3ʹ par une matière élastomérique, afin d'empêcher l'introduction de la poussière. Cette construction, du reste similaire de celle suivant les figures 1 et 2, évite l'usinage du deuxième siège 3 et donc les frais et les difficultés comportés par cet usinage.

Du fait que les entretoises 17 ont en tous cas une masse très réduite, elles peuvent être fabriquées avec du matériaux de grande résistance sans comporter des frais excessifs. De cette façon l'on peut réduire ultérieurement leur dimensions, en réduisant de conséquence les dimensions générales d'encombrement de la pince.

Suivant une modification possible, les entretoises 17, au lieu de constituer des éléments constructivement séparés de la traverse 15 et appliqués à la même, peuvent être réalisées en une seule pièce avec la traverse. Cela peut être fait par exemple en pliant opportunément un tréfilé ayant une section appropriée, laquelle peut éventuellement se modifier de point à point.

On doit remarquer que la construction suivant l'invention, décrite jusqu'ici comme appliquée à une pince dont l'actionnement est seulement hydraulique, peut être facilement adaptée aux exigences des pinces pour lesquelles on a prévu aussi un actionnement mécanique, comme le sont en général les pinces des freins destinés aux roues postérieures des véhicules automobiles. A cet effet l'on doit simplement remplacer un corps 22 suivant les figures 5 et 6, pourvu de double actionnement hydraulique et mécanique, au corps 12 des figures 1 à 3, qui est pourvu de l'actionnement hydraulique seulement; et cela sans aucune autre modification aux composants de la pince.

Le corps 22 des figures 5 et 6 présente un cylindre 23 dans lequel, par l'intervention d'une garniture 31 et d'un soufflet 24, se déplace un piston 26 disposé pour agir sur le premier patin de freinage 5. Le corps 22 a aussi une tête en saillie 25 dans laquelle est pivoté un levier 27 pourvu de moyens 28 pour coopérer avec une tringle mécanique (non représentée) dont le fourreau prend appui sur un siège 29 du corps 22. Des moyens internes de transmission 30 appliquent une poussée sur le piston 26 lorsque le levier 27 est tourné moyennant la tringle mécanique. Le dispositif de commande mécanique (similaire en soi à celui qui est compris dans les pinces connues qui en sont pourvues, et fonctionnant de la même façon) influence seulement la partie 22 du corps de la pince, laquelle, comme indiqué, doit être remplacée à la partie 12 suivant les figures 1 et 3 lorsque la pince doit être actionnée aussi mécaniquement, mais sans demander aucune autre modification aux parties de la pince. Il s'ensuit une réduction des frais inhérents à la spécialisation des pinces pourvues de commande mécanique en sus de la commande hydraulique.

Bien entendu, les formes de réalisation décrites et représentées constituent des exemples, et différentes modifications doivent être portées à la forme et aux proportions des parties pour adapter la pince aux exigences d'installation de chaque modèle de véhicule.

## Revendications

1. Pince pour frein à disque, du type comprenant un étrier (1) destiné à être monté en position fixe à proximité d'un disque tournant de frein (D) associé, un corps flottant (12, 15) supporté par ledit étrier (1) de manière à pouvoir se déplacer perpendiculairement au plan dudit disque de frein (D), une partie (12) dudit corps flottant constituant un cylindre hydraulique (13) avec axe parallèle à la direction de mouvement du corps, un piston (16) installé dans ledit cylindre (13), et deux patins de freinage (5, 8) disposés entre des faces de support et de guidage dans l'étrier (1) de manière à agir sur les deux faces dudit disque de frein (D) et opérativement reliés, respectivement, audit piston (16) et à la partie (15) du corps opposée audit cylindre (13), le corps étant constitué par deux parties (12, 15) constructivement séparées, l'une (12) disposée d'un côté du disque de frein (D) associé, comprenant le cylindre hydraulique (13) et agissant sur le premier patin de freinage (5), et l'autre (15) disposée du côté opposé du disque de frein (D) et agissant sur le deuxième patin de freinage (8), lesdites deux parties (12, 15) du corps s'étendant le long d'une ligne (L) qui passe substantiellement par les centres (C) de pression des patins de frein (5, 8), des deux côtés des patins, jusqu'à un point au-delà de la périphérie du disque de frein (D), lesdites deux parties (12, 15) du corps étant reliées entre elles par deux entretoises (17) disposées perpendiculairement au plan du disque de frein (D), en dehors de sa périphérie et substantiellement sur ladite ligne (L) qui passe par les centres de pression (C) des patins de freinage, au moins l'une desdites entretoises (17) traversant l'étrier (1), et des goupilles (7) étant prévues pour maintenir les patins en position, caractérisé en ce que ledit étrier (1) forme deux épaulements (4) portant les faces de support et de guidage pour les patins de freinage (5, 8), et en ce que lesdits épaulements (4) et lesdits patins (5, 8) sont pourvus de sièges destinés à recevoir lesdites goupilles (7).

2. Pince pour frein à disque selon la revendication 1, caractérisée en ce que lesdites goupilles (7) sont des goupilles élastiques, et qu'elles sont disposées de sorte à compenser les jeux de montage des patins de freinage (5, 8) par rapport à l'étrier (1).

3. Pince pour frein a disque selon la revendication 1, caractérisée en ce que ladite entretoise (17) traversant l'étrier est couplée à glissement dans un siège (3) de l'étrier en constituant un accouplement de guidage protégé par un soufflet (19) ou similaire.

4. Pince pour frein à disque selon la revendication 1, caractérisée en ce que l'une seulement (17) desdites entretoises traverse l'étrier (1) en correspondance d'un siège (3) en constituant un accouplement de guidage protégé par des soufflets (19) ou similaires, tandis que l'autre entretoise (17') est tenue en position par des moyens de retenue simples, tels qu'une broche (3').

5. Pince pour frein à disque selon la revendication 1, caractérisée en ce que l'une (17) desdites entretoises traverse l'étrier (1) en correspondance d'un siège (3) en constituant un accouplement de guidage, tandis que l'autre entretoise (17') traverse l'étrier en correspondance d'un siège ayant un jeu considérable et elle y est centrée par un élément souple (3' ou 21).

6. Pince pour frein à disque selon la revendication 5, caractérisée en ce que ledit élément souple est constitué par une broche (3') ou similaire.

7. Pince pour Frein à disque selon la revendication 5, caractérisée en ce que ledit élément souple est constitué par une douille (21) en matière elastomérique ou similaire, insérée entre un siège (3) présenté par l'étrier (1) et un fourreau (20) dans lequel se déplace la deuxième entretoise (17').

## Claims

1. Caliper assembly for a disk brake, of the type comprising a caliper (1) intended to be mounted in a fixed position close to an associated rotating brake disk (D), a floating body (12, 15) supported by said caliper (1) so as to be able to move perpendicularly to the plane of said brake disk (D), one part (12) of said floating body constituting a hydraulic cylinder (13) with axis parallel to the direction of movement of the body, a piston (16) installed in said cylinder (13), and two brake pads (5, 8) arranged between support and guide faces in the caliper (1) so as to act on the two faces of said brake disk (D), and operationally connected, respectively, to said piston (16) and to the part (15) of the body opposite said cylinder (13), the body being made up of two parts (12, 15) which are constructionally separated, one (12) arranged on one side of the associated brake disk (D), comprising the hydraulic cylinder (13) and acting on the first brake pad (5), and the other (15) arranged on the opposite side of the brake disk (D) and acting on the second brake pad (8), said two parts (12, 15) of the body extending along a line (L) which passes substantially through the centers (C) of pressure of the brake pads (5, 8) on both sides of the pads, as far as the point beyond the periphery of the brake disk (D), said two parts (12, 15) of the body being connected to each other by two spacers (17) arranged perpendicular to the plane of the brake disk (D), outside its periphery and substantially on said line (L) which passes through the centers of pressure (C) of the brake pads, at least one of said spacers (17) passing through the caliper (1), and pegs (7) being provided for holding the pads in position, characterized in that said caliper (1) forms two shoulders (4) carrying the support and guide faces for the brake pads (5, 8), and in that said shoulders (4) and said pads (5, 8) are provided with seats intended to receive said pegs (7).

2. Caliper assembly for disk brake according to Claim 1, characterized in that said pegs (7) are elastic pegs and that they are arranged so as to compensate for the mounting clearances of the brake pads (5, 8) with respect to the caliper (1).

3. Caliper assembly for a disk brake according to Claim 1, characterized in that said spacer (17) passing through the caliper is slidingly coupled into a seat (3) of the caliper thereby constituting a guidance coupling protected by a bellows (19) or the like.

4. Caliper assembly for a disk brake according to Claim 1, characterized in that just one (17) of said spacers passes through the caliper (1) opposite a seat (3) thereby constituting a guidance coupling protected by bellows (19) or the like, whereas the other spacer (17') is held in position by simple retention means, such as a spindle (3').

5. Caliper assembly for a disk brake according to Claim 1, characterized in that one (17) of said spacers passes through the caliper (1) opposite a seat (3) thereby constituting a guidance coupling, whereas the other spacer (17') passes through the caliper opposite a seat having considerable play and it is centered therein by a flexible element (3' or 21).

6. Caliper assembly for a disk brake according to Claim 5, characterized in that said flexible element is made up of a spindle (3') or the like.

7. Caliper assembly for a disk brake according to Claim 5, characterized in that said flexible element is made up of a bush (21) made from an elastomeric material or the like, inserted between a seat (3) exhibited by the caliper (1) and a sleeve (20) in which the second spacer (17') moves.

## Patentansprüche

1. Klemme für eine Scheibenbremse vom Typ mit einem Bremssattel (1), der zum Anbringen an einer festen Position in der Nähe einer zugehörigen Drehbremsscheibe (D) bestimmt ist, einem Schwimmkörper (12, 15), der durch den Bremssattel (1) so gestützt wird, daß er sich senkrecht zu der Ebene der Bremsscheibe (D) verschieben kann, wobei ein Teil (12) des Schwimmkörpers einen Hydraulikzylinder (13) mit einer zur Bewegungsrichtung des Körpers parallelen Achse bildet, einem in dem Zylinder (13) installierten Kolben (16), sowie zwei Bremsklötzen (5, 8), die zwischen Stütz- und Führungsflächen in dem Bremssattel (1) so angeordnet sind, daß sie auf die beiden Seiten der Bremsscheibe (D) wirken, und mit dem Kolben (16) bzw. dem dem Zylinder (13) entgegengesetzten Teil (15) des Körpers wirksam verbunden sind, wobei der Körper aus zwei konstruktiv getrennten Teilen (12, 15) gebildet ist, von denen der eine (12) an einer Seite der zugehörigen Bremsscheibe (D) angeordnet ist, den Hydraulikzylinder (13) aufweist und auf den ersten Bremsklotz (5) wirkt, und der andere (15) an der entgegengesetzten Seite der Bremsscheibe (D) angeordnet ist und auf den zweiten Bremsklotz (8) wirkt, wobei sich die beiden Teile (12, 15) des Körpers längs einer Linie (L) erstrecken, die im wesentlichen durch die Druckzentren (C) der Bremsklötze (5, 8) an beiden Seiten der Klötze bis zu einem Punkt jenseits des Umfangs der Bremsscheibe (D) verläuft, wobei die beiden Teile (12, 15) des Körpers untereinander durch zwei senkrecht zu der Ebene der Bremsscheibe (D), außerhalb ihres Umfangs und im wesentlichen auf der Linie (L), die durch die Druckzentren (C) der Bremsklötze verläuft, angeordnete Streben (17) verbunden sind, wobei wenigstens eine der Streben (17) den Bremssattel (1) durchquert und Stifte (7) vorgesehen sind, um die Klötze in Position zu halten, dadurch gekennzeichnet, daß der Bremssattel (1) zwei die Stütz- und Führungsflächen für die Bremsklötze haltende Schultern (4) bildet, und daß die Schultern (4) und die Klötze (5, 8) mit zur Aufnahme der Stifte (7) bestimmten Sitzen versehen sind.

2. Klemme für eine Scheibenbremse nach Anspruch 1, dadurch gekennzeichnet, daß die Stifte (7) elastische Stifte sind und daß sie so angeordnet sind, daß sie das Montagespiel der Bremsklötze (5, 8) bezüglich des Bremssattels (1) ausgleichen.

3. Klemme für eine Scheibenbremse nach Anspruch 1, dadurch gekennzeichnet, daß die den Bremssattel durchquerende Strebe (17) gleitend in einem Sitz (3) des Bremssattels gekoppelt ist, wobei sie eine durch einen Balg (19) oder ähnliches geschützte Führungskupplung bildet.

4. Klemme für eine Scheibenbremse nach Anspruch 1, dadurch gekennzeichnet, daß nur eine (17) der Streben den Bremssattel (1) in Entsprechung zu einem Sitz (3) durchquert, wobei sie eine durch Bälge (19) oder ähnliches geschützte Kupplung bildet, während die andere Strebe (17') durch einfache Haltemittel wie einen Stift (3') in Position gehalten wird.

5. Klemme für eine Scheibenbremse nach Anspruch 1, dadurch gekennzeichnet, daß eine (17) der Streben den Bremssattel (1) in Entsprechung zu einem Sitz (3) durchquert, wobei sie eine Führungskupplung bildet, während die andere Strebe (17') den Bremssattel in Entsprechung zu einem Sitz mit einem beträchtlichen Spiel durchquert und dort durch ein elastisches Element (3' oder 21) zentriert ist.

6. Klemme für eine Scheibenbremse nach Anspruch 5, dadurch gekennzeichnet, daß das elastische Element durch einen Stift (3') oder ähnliches gebildet ist.

7. Klemme für eine Scheibenbremse nach Anspruch 5, dadurch gekennzeichnet, daß das elastische Element durch eine Hülse (21) aus einem Elastomermaterial oder ähnlichem gebildet ist, die zwischen einen durch den Bremssattel (1) vorgesehenen Sitz (3) und eine Gleithülse (20) eingesetzt ist, in der sich die zweite Strebe (17') verschiebt.
